# EUROPEAN PATENT APPLICATION

(11) **EP 4 212 373 A1**
(43) Date of publication of application: **19.07.2023**
(21) Application number: 21878978.2
(22) Date of filing: 02.06.2021
(51) Int. Cl.: B60K 7/00

(54) **VEHICLE DRIVING SYSTEM AND ELECTRIC VEHICLE**

(30) Priority: 16.10.2020 CN 202011110725
(71) Applicant: Huawei Digital Power Technologies Co., Ltd., Shenzhen, Guangdong 518043 (CN)
(72) Inventor: MA, Wenwu, Shenzhen, Guangdong 518129 (CN); YIN, Xiaode, Shenzhen, Guangdong 518129 (CN)
(74) Representative: Gill Jennings & Every LLP
(86) International application number: PCT/CN2021/097820
(87) International publication number: WO 2022/077925

(57) **Abstract**

This application provides a vehicle drive system and an electric vehicle. In the vehicle drive system, a hybrid drive manner of dual hub drive assemblies and a centralized drive assembly/dual independent drive assemblies is used. When the vehicle travels at a constant speed with a small torque, the dual hub drive assemblies are used to drive the vehicle. When the vehicle accelerates startup or accelerates to overtake, a large torque is required, and the centralized drive assembly/dual independent drive assemblies is/are used to drive the vehicle, or the centralized drive assembly/dual independent drive assemblies and the dual hub drive assemblies are used together to drive the vehicle. Therefore, the vehicle drive system provided in this application uses the hybrid drive manner of dual hub drive assemblies and the centralized drive assembly/dual independent drive assemblies, so that advantages of a hub drive assembly are mainly used to make best use of the advantages and bypass disadvantages, thereby improving operation efficiency of the vehicle drive system, simplifying a structure, and implementing an electronic differential.

## Description

### CROSS-REFERENCE TO RELATED APPLICATIONS

This application claims priority to Chinese Patent Application No. 202011110725.8, filed with the China National Intellectual Property Administration on October 16, 2020 and entitled "VEHICLE DRIVE SYSTEM AND ELECTRIC VEHICLE", which is incorporated herein by reference in its entirety.

### TECHNICAL FIELD

This application relates to the field of vehicle drive technologies, and in particular, to a vehicle drive system and an electric vehicle.

### BACKGROUND

In recent years, environmental pollution and energy shortage have accelerated development and utilization of green renewable energy. Electric vehicles have become a research focus in the automobile industry because of advantages such as low pollution, low noise, and high energy efficiency. A vehicle drive system is a core component of an electric vehicle. Currently, the vehicle drive system has a plurality of manners, for example, a centralized drive manner and a distributed drive manner.

In the centralized drive manner, one centralized drive assembly is used to provide power for two wheels, or two centralized drive assemblies are used to provide power for four wheels. A technology of operating an electric vehicle that uses the centralized drive manner is mature, safe, and reliable. However, the centralized drive assembly is large in size and heavy in weight, most vehicles run in a range of low power and a small torque most of the time, and acceleration performance with high power and a large torque is occasionally used. However, a highly efficient region of the centralized drive assembly is concentrated in a high-power and large-torque region. Therefore, overall efficiency of an electric vehicle is low in actual operation.

In the distributed drive manner, left and right wheels are driven separately, and the distributed drive manner is divided into dual-drive system independent drive, wheel drive, and hub drive. A hub drive assembly has a quite simple structure in which a large quantity of transmission components are omitted, and is directly mounted in a wheel. Internal space utilization of a vehicle body is high, and various complex drive control can be implemented. Therefore, at present, development and research of the hub drive assembly gradually become a hot topic in the industry. However, under same power, the hub drive assembly is larger in size and heavier in weight than the centralized drive assembly, leading to larger unsprung mass, poorer comfort, and higher costs. Therefore, the hub drive assembly is not widely used.

### SUMMARY

This application provides a vehicle drive system and an electric vehicle, so that advantages of a hub drive assembly are used to make best use of the advantages and bypass disadvantages, thereby improving operation efficiency of the vehicle drive system, simplifying a structure, and implementing an electronic differential.

According to a first aspect, this application provides a vehicle drive system, including: a first drive module configured to drive wheels on a first side of a vehicle, a second drive module configured to drive wheels on a second side of the vehicle, and a vehicle control unit configured to control the first drive module and the second drive module. The first drive module includes a first hub drive assembly and a second hub drive assembly, and the first hub drive assembly and the second hub drive assembly are respectively configured to drive a left wheel and a right wheel of the wheels on the first side of the vehicle. The second drive module includes a centralized drive assembly, and the centralized drive assembly is configured to drive a left wheel and a right wheel of the wheels on the second side of the vehicle synchronously; or the second drive module includes a first independent drive assembly and a second independent drive assembly, and the first independent drive assembly and the second independent drive assembly are respectively configured to drive the left wheel and the right wheel of the wheels on the second side of the vehicle. It should be noted that, in this application, one of the first side and the second side is a front side, and the other is a rear side. That is, the first drive module is configured to drive the wheels on the front side of the vehicle, and the second drive module is configured to drive the wheels on the rear side of the vehicle; or the first drive module is configured to drive the wheels on the rear side of the vehicle, and the second drive module is configured to drive the wheels on the front side of the vehicle.

In the vehicle drive system provided in this application, a hybrid drive manner of dual hub drive assemblies and a centralized drive assembly/dual independent drive assemblies is used. When the vehicle travels at a constant speed with a small torque, the dual hub drive assemblies are used to drive the vehicle. When the vehicle accelerates startup or accelerates to overtake, a large torque is required, and the centralized drive assembly/dual independent drive assemblies is/are used to drive the vehicle, or the centralized drive assembly/dual independent drive assemblies and the dual hub drive assemblies are used together to drive the vehicle. Therefore, the vehicle drive system provided in this application uses a hybrid drive manner of dual hub drive assemblies and a centralized drive assembly/dual independent drive assemblies, so that advantages of a hub drive assembly are mainly used to make best use of the advantages and bypass disadvantages, thereby improving operation efficiency of the vehicle drive system, simplifying a structure, and implementing an electronic differential.

In a possible implementation, each of the hub drive assemblies may include a first motor and a first motor control unit; the centralized drive assembly includes a second motor, a second motor control unit, and a second reducer; and the vehicle control unit is separately connected to each motor control unit. In a specific implementation, the first motor in the hub drive assembly is disposed in a wheel of the vehicle, and the first motor control unit may be disposed on the wheel, or may be disposed at another position of the vehicle, for example, a chassis of the vehicle. This is not limited herein. The centralized drive assembly is usually disposed on the chassis of the vehicle, and the centralized drive assembly provides power drive to the left wheel and the right wheel of the vehicle respectively by using two half axles.

In a possible implementation, when the second drive module includes the centralized drive assembly, the first motor control unit in the first hub drive assembly and the first motor control unit in the second hub drive assembly are a same motor control unit. That is, the two hub drive assemblies share a same motor control unit, to reduce a quantity of motor control units in the vehicle drive system, so that costs can be reduced. In a specific implementation, the first motor control unit may be disposed on the left wheel of the wheels on the first side of the vehicle, or may be disposed on the right wheel of the wheels on the first side of the vehicle, or certainly may be disposed on the chassis of the vehicle. This is not limited herein.

In a possible implementation, the second motor control unit in the centralized drive assembly, the first motor control unit in the first hub drive assembly, and the first motor control unit in the second hub drive assembly are a same motor control unit. That is, the two hub drive assemblies and the centralized drive assembly share a same motor control unit, to further reduce a quantity of motor control units in the vehicle drive system, so that costs can be reduced. In a specific implementation, the motor control unit may be disposed on the left wheel of the wheels on the first side of the vehicle, or may be disposed on the right wheel of the wheels on the first side of the vehicle, or certainly may be disposed on the chassis of the vehicle. This is not limited herein.

In a possible implementation, the hub drive assembly may include a first motor and a first motor control unit; the independent drive assembly may include a third motor, a third motor control unit, and a third reducer; and the vehicle control unit is separately connected to each motor control unit. The first independent drive assembly and the second independent drive assembly are used to respectively drive the left wheel and the right wheel of the wheels on the second side of the vehicle, so that the electric vehicle can obtain strong power, and acceleration performance is good, thereby significantly shortening an acceleration time. In a specific implementation, the first independent drive assembly and the second independent drive assembly are usually disposed on the chassis of the vehicle, and the independent drive assemblies provide power drive to the left wheel and the right wheel of the vehicle respectively by using a half axle.

In a possible implementation, when the second drive module includes the first independent drive assembly and the second independent drive assembly, the first motor control unit in the first hub drive assembly and the first motor control unit in the second hub drive assembly are a same motor control unit. That is, the two hub drive assemblies share a same motor control unit, to reduce a quantity of motor control units in the vehicle drive system, so that costs can be reduced. In a specific implementation, the first motor control unit may be disposed on the left wheel of the wheels on the first side of the vehicle, or may be disposed on the right wheel of the wheels on the first side of the vehicle, or certainly may be disposed on the chassis of the vehicle. This is not limited herein.

In a possible implementation, the third motor control unit in the first independent drive assembly and the third motor control unit in the second independent drive assembly are a same motor control unit. That is, the two independent drive assemblies share a same motor control unit, to reduce a quantity of motor control units in the vehicle drive system, so that costs can be reduced. In a specific implementation, the third motor control unit may be disposed on the chassis of the vehicle. This is not limited herein.

In a possible implementation, the first motor control unit in the first hub drive assembly and the first motor control unit in the second hub drive assembly are a same motor control unit, and the third motor control unit in the first independent drive assembly, and the third motor control unit in the second independent drive assembly are a same motor control unit. That is, the two independent drive assemblies share a same motor control unit, and the two hub drive assemblies share a same motor control unit, to reduce a quantity of motor control units in the vehicle drive system, so that costs can be reduced. In a specific implementation, the first motor control unit may be disposed on the left wheel of the wheels on the first side of the vehicle, or may be disposed on the right wheel of the wheels on the first side of the vehicle, or certainly may be disposed on the chassis of the vehicle. The third motor control unit may be disposed on the chassis of the vehicle. This is not limited herein.

In a possible implementation, the third motor control unit in the first independent drive assembly, the third motor control unit in the second independent drive assembly, the first motor control unit in the first hub drive assembly, and the first motor control unit in the second hub drive assembly are a same motor control unit. That is, the two hub drive assemblies and the two independent drive assemblies share a same motor control unit, to further reduce a quantity of motor control units in the vehicle drive system, so that costs can be reduced. In a specific implementation, the motor control unit may be disposed on the left wheel of the wheels on the first side of the vehicle, or may be disposed on the right wheel of the wheels on the first side of the vehicle, or certainly may be disposed on the chassis of the vehicle. This is not limited herein.

For example, in this application, the hub drive assembly further includes a first reducer. That is, the first reducer is added to the hub drive assembly, and power of the first motor is reduced by using the first reducer, so as to reduce a weight and costs of the hub drive assembly.

Optionally, when the first side is the front side of the vehicle, the hub drive assembly may further include a vehicle steering unit. The vehicle steering unit is configured to control vehicle steering under control of an instruction of the vehicle control unit. In a specific implementation, the vehicle steering unit is usually disposed on an outer side of a wheel, to increase a front side space of the vehicle.

Optionally, the hub drive assembly further includes a vehicle body lifting unit. The vehicle body lifting unit is configured to control ascent and descent of a vehicle body under control of an instruction of the vehicle control unit. In a specific implementation, the vehicle body lifting unit is usually disposed on an upper side of a wheel, to increase a vehicle space.

Further, in this embodiment of this application, the hub drive assembly may further include a shock absorption unit, and the shock absorption unit is disposed in the hub drive assembly, to further increase a vehicle space.

For example, in this application, the first drive module further includes a synchronization control unit; and the synchronization control unit is configured to control, based on one of the hub drive assemblies, the other hub drive assembly. That is, the synchronization control unit is configured to control the second hub drive assembly based on the first hub drive assembly, or the synchronization control unit is configured to control the first hub drive assembly based on the second hub drive assembly.

In a specific implementation, the synchronization control unit is separately connected to the first motor control unit of the first hub drive assembly and the first motor control unit of the second hub drive assembly. The synchronization control unit is mainly configured to control, based on a wheel speed and a torque of a wheel controlled by one hub drive assembly, a wheel speed and a torque of a wheel controlled by the other hub drive assembly. A manner of communication between the synchronization control unit and the first hub drive assembly and the second hub drive assembly may be a wireless communication manner, for example, Bluetooth communication, or certainly may be a direct electrical connection.

Optionally, the vehicle drive system provided in this embodiment of this application further includes a power supply module. The power supply module is configured to provide a power supply for the first drive module and the second drive module. In a specific implementation, the power supply module may include one, two, or more battery components. This is not limited herein. A large quantity of battery components in the power supply module indicates high performance, but also higher costs. This may be specifically set based on an actual situation.

Optionally, in this embodiment of this application, the power supply module includes a first battery component and a second battery component; the first battery component is configured to provide a power supply for the first drive module; and the second battery component is configured to provide a power supply for the second drive module. In this way, two battery components are used to provide power supplies. In one aspect, a battery life of the vehicle can be improved, and in a further aspect, when one of the battery components has a fault, the other battery component can continue to be used, to provide vehicle safety.

In a possible implementation, in this embodiment of this application, the motor control unit includes a power control part and an electronic control part; the power control part is configured to convert a voltage of the power supply provided by the power supply module into a target voltage; the electronic control part is configured to control, under control of the vehicle control unit, the power control part to provide the target voltage to the motor; and the electronic control part and the vehicle control unit are integrated together.

In a specific implementation, the motor control unit may be the first motor control unit in the hub drive assembly, or may be the second motor control unit in the centralized drive assembly, or certainly may be the third motor control unit in the independent drive assembly. The electronic control part in the motor control unit and the vehicle control unit are integrated together, so that the corresponding drive assembly can respond in real time and real-time performance of the vehicle drive system can be improved.

For example, in the vehicle drive system provided in this application, any one of the motors may include a synchronous motor, an asynchronous motor, an excitation motor, or the like. This is not limited herein.

Optionally, in the vehicle drive system provided in this application, any one of the reducers may include a single-level reducer, a dual-level reducer, or a multi-level reducer. This is not limited herein. Further, a power disconnection module may be further disposed in the reducer, and the power disconnection module is configured to disconnect control of a motor over a wheel.

According to a second aspect, this application provides an electric vehicle, including a vehicle body, a chassis, and the vehicle drive system in any one of the foregoing technical solutions of this application. Because the vehicle drive system provided in this application uses a hybrid drive manner of dual hub drive assemblies and a centralized drive assembly/dual independent drive assemblies, the electric vehicle in this application also has advantages of both the hub drive assembly and the centralized drive assembly/dual independent drive assemblies, and the advantages of the hub drive assembly are mainly used to make best use of the advantages and bypass disadvantages, thereby improving operation efficiency of the vehicle drive system, simplifying a structure, and implementing an electronic differential.

### BRIEF DESCRIPTION OF DRAWINGS

FIG. 1 is a schematic diagram of a structure of a vehicle drive system according to this application;
FIG. 2 is a schematic diagram of a structure of another vehicle drive system according to this application;
FIG. 3 is a schematic diagram of a structure of still another vehicle drive system according to this application;
FIG. 4 is a schematic diagram of a structure of still another vehicle drive system according to this application;
FIG. 5 is a schematic diagram of a structure of still another vehicle drive system according to this application;
FIG. 6 is a schematic diagram of a structure of still another vehicle drive system according to this application;
FIG. 7 is a schematic diagram of a structure of still another vehicle drive system according to this application;
FIG. 8 is a schematic diagram of a structure of still another vehicle drive system according to this application;
FIG. 9 is a schematic diagram of a structure of still another vehicle drive system according to this application;
FIG. 10 is a schematic diagram of a structure of still another vehicle drive system according to this application;
FIG. 11 is a schematic diagram of a structure of still another vehicle drive system according to this application;
FIG. 12 is a schematic diagram of a structure of still another vehicle drive system according to this application;
FIG. 13 is a schematic diagram of a structure of still another vehicle drive system according to this application;
FIG. 14 is a schematic diagram of a structure of still another vehicle drive system according to this application;
FIG. 15 is a schematic diagram of a structure of still another vehicle drive system according to this application;
FIG. 16 is a schematic diagram of a structure of still another vehicle drive system according to this application;
FIG. 17 is a schematic diagram of a structure of still another vehicle drive system according to this application;
FIG. 18 is a schematic diagram of a structure of still another vehicle drive system according to this application;
FIG. 19 is a schematic diagram of a structure of still another vehicle drive system according to this application;
FIG. 20 is a schematic diagram of a structure of still another vehicle drive system according to this application;
FIG. 21 is a schematic diagram of a structure of still another vehicle drive system according to this application;
FIG. 22 is a schematic diagram of a structure of still another vehicle drive system according to this application;
FIG. 23 is a schematic diagram of a structure of still another vehicle drive system according to this application;
FIG. 24 is a schematic diagram of a structure of still another vehicle drive system according to this application;
FIG. 25 is a schematic diagram of a structure of still another vehicle drive system according to this application;
FIG. 26 is a schematic diagram of a structure of still another vehicle drive system according to this application; and
FIG. 27 is a schematic diagram of a partial structure of a vehicle drive system according to this application.

### DESCRIPTION OF EMBODIMENTS

To make the objectives, technical solutions, and advantages of this application clearer, the following further describes this application in detail with reference to the accompanying drawings.

Terms used in the following embodiments are merely intended to describe specific embodiments, but are not intended to limit this application. As used in this specification and the appended claims of this application, the singular expressions "one", "a", "the", "the foregoing", "said", and "this" are intended to also include expressions such as "one or more", unless explicitly indicated to the contrary in the context.

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

The following clearly and completely describes the technical solutions in embodiments of this application with reference to the accompanying drawings in embodiments of this application.

As a core component of an electric vehicle, a vehicle drive system directly determines performance of the electric vehicle.

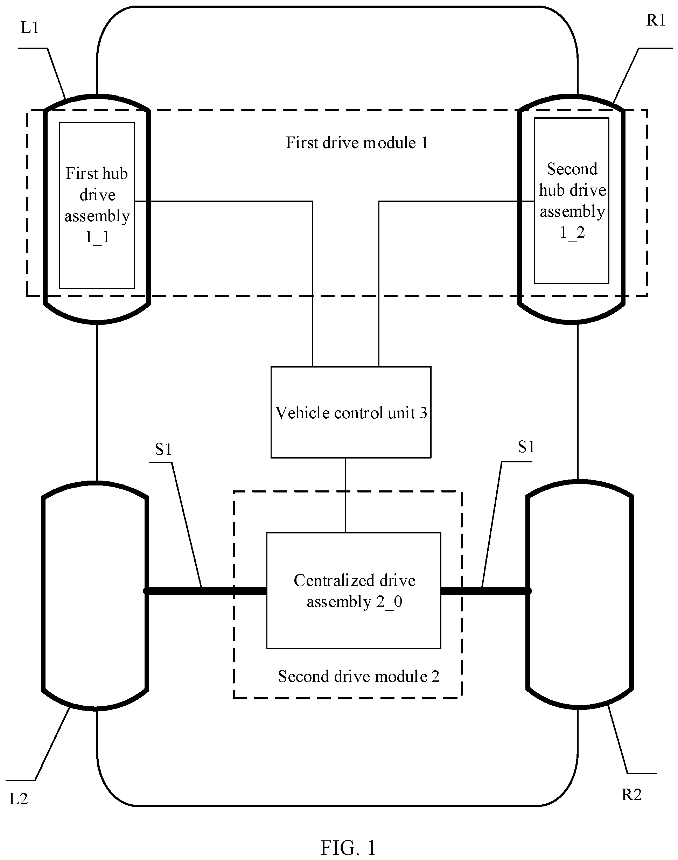

FIG. 1 is an example of a schematic diagram of a structure of a vehicle drive system according to an embodiment of this application. With reference to FIG. 1, the vehicle drive system provided in this embodiment of this application includes: a first drive module 1 configured to drive wheels on a first side of a vehicle, a second drive module 2 configured to drive wheels on a second side of the vehicle, and a vehicle control unit 3 configured to control the first drive module 1 and the second drive module 2. The first drive module 1 includes a first hub drive assembly 1_1 and a second hub drive assembly 1_2, and the first hub drive assembly 1_1 and the second hub drive assembly 1_2 are respectively configured to drive a left wheel L1 and a right wheel R1 of the wheels on the first side of the vehicle. The second drive module 2 includes a centralized drive assembly 2_0, and the centralized drive assembly 2_0 is configured to drive a left wheel L2 and a right wheel R2 of the wheels on the second side of the vehicle synchronously.

In the vehicle drive system provided in this application, a hybrid drive manner of dual hub drive assemblies and a centralized drive assembly is used. When the vehicle travels at a constant speed with a small torque, the dual hub drive assemblies are used to drive the vehicle. When the vehicle accelerates startup or accelerates to overtake, a large torque is required, and the centralized drive assembly is used to drive the vehicle, or the centralized drive assembly and the dual hub drive assemblies are used together to drive the vehicle. Therefore, compared with a drive system that uses only a centralized drive assembly, operation efficiency of the vehicle drive system provided in this application can be improved. Compared with a drive system that uses only a hub drive assembly, because the hub drive assembly in this application is mainly used for driving with low power and a small torque, both a size and a weight of the hub drive assembly are small, so that unsprung mass can be reduced, thereby improving vehicle comfort. That is, the vehicle drive system provided in this application can have advantages of both the hub drive assembly and the centralized drive assembly.

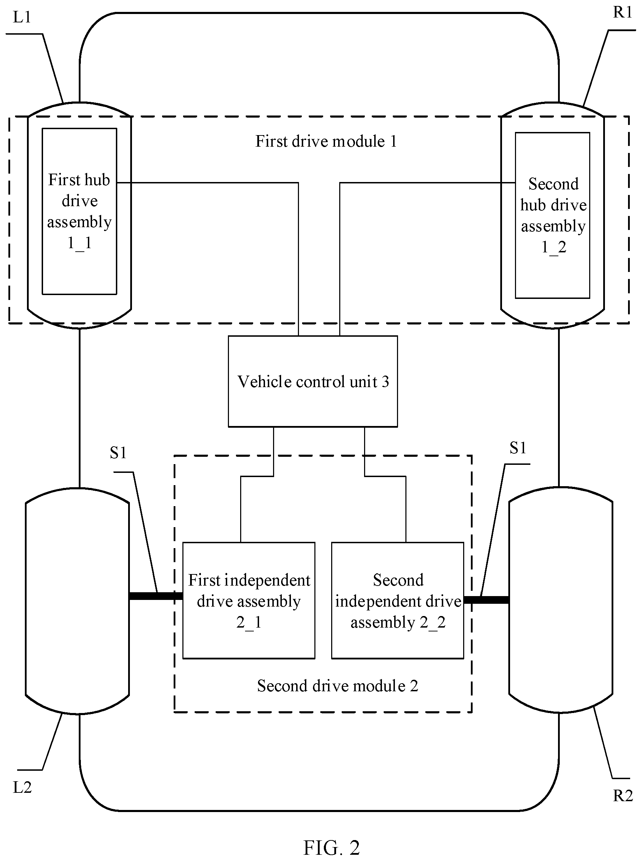

FIG. 2 shows an example of a schematic diagram of a structure of another vehicle drive system according to an embodiment of this application. With reference to FIG. 2, the vehicle drive system provided in this embodiment of this application includes: a first drive module 1 configured to drive wheels on a first side of a vehicle, a second drive module 2 configured to drive wheels on a second side of the vehicle, and a vehicle control unit 3 configured to control the first drive module 1 and the second drive module 2. The first drive module 1 includes a first hub drive assembly 1_1 and a second hub drive assembly 1_2, and the first hub drive assembly 1_1 and the second hub drive assembly 1_2 are respectively configured to drive a left wheel L 1 and a right wheel R1 of the wheels on the first side of the vehicle. The second drive module 2 includes a first independent drive assembly 2_1 and a second independent drive assembly 2_2, and the first independent drive assembly 2_1 and the second independent drive assembly 2_2 are respectively configured to drive a left wheel L2 and a right wheel R2 of the wheels on the second side of the vehicle.

In the vehicle drive system provided in this application, a hybrid drive manner of dual hub drive assemblies and dual independent drive assemblies is used. When the vehicle travels at a constant speed with a small torque, the dual hub drive assemblies are used to drive the vehicle. When the vehicle accelerates startup or accelerates to overtake, a large torque is required, and the dual independent drive assemblies are used to drive the vehicle, or the dual independent drive assemblies and the dual hub drive assemblies are used together to drive the vehicle. Therefore, compared with a manner in which only an independent drive assembly is used, operation efficiency of the vehicle drive system provided in this application can be improved. Compared with a drive system that uses only hub drive assemblies, because the hub drive assembly in this application is mainly used for driving with low power and a small torque, both a size and a weight of the hub drive assembly are small, so that unsprung mass can be reduced, thereby improving vehicle comfort. That is, the vehicle drive system provided in this application can have advantages of both the hub drive assembly and the independent drive assembly.

In conclusion, the vehicle drive system provided in this application uses a hybrid drive manner of dual hub drive assemblies and a centralized drive assembly/dual independent drive assemblies, so that advantages of a hub drive assembly are mainly used to make best use of the advantages and bypass disadvantages, thereby improving operation efficiency of the vehicle drive system, simplifying a structure, and implementing an electronic differential.

It should be noted that, in this application, one of the first side and the second side is a front side, and the other is a rear side. That is, the first drive module is configured to drive the wheels on the front side of the vehicle, and the second drive module is configured to drive the wheels on the rear side of the vehicle; or the first drive module is configured to drive the wheels on the rear side of the vehicle, and the second drive module is configured to drive the wheels on the front side of the vehicle.

In a specific implementation, because most vehicles run in a range of low power and a small torque most of the time, it is easier to operate front-wheel drive than rear-wheel drive of the vehicle. Therefore, in this application, preferentially, the first drive module is configured to drive the wheels on the front side of the vehicle, and the second drive module is configured to drive the wheels on the rear side of the vehicle. In addition, the wheels on the front side of the vehicle use the hub drive assemblies, so that a weight of the front side of the vehicle is less than a weight of the rear side of the vehicle, and when a collision occurs, safety performance is higher In the accompanying drawings of this specification of this application, an example in which the wheels on the front side of the vehicle use the hub drive assemblies is used for illustration.

In the vehicle drive system provided in this application, the first drive module may be used to provide power for the vehicle, that is, a front-wheel drive mode; or the second drive module may be used to provide power for the vehicle, that is, a rear-wheel drive mode. To increase output power of the entire vehicle and improve acceleration performance, a four-wheel drive mode may alternatively be used, that is, the first drive module and the second drive module jointly provide power for the vehicle. In this case, the two drive modules may be in asynchronous, electric excitation, synchronous, and other forms. The vehicle control unit may send an instruction to the first drive module and the second drive module by detecting an amplitude of an accelerator pedal, so that the vehicle drive system switches between a front-wheel drive mode, a rear-wheel drive mode, and the four-wheel drive mode.

The following further describes, by using specific embodiments, the vehicle drive system provided in this application as an example. It should be noted that, embodiments of this application are intended to better explain the present invention, but are not intended to limit the present invention.

### Example 1:

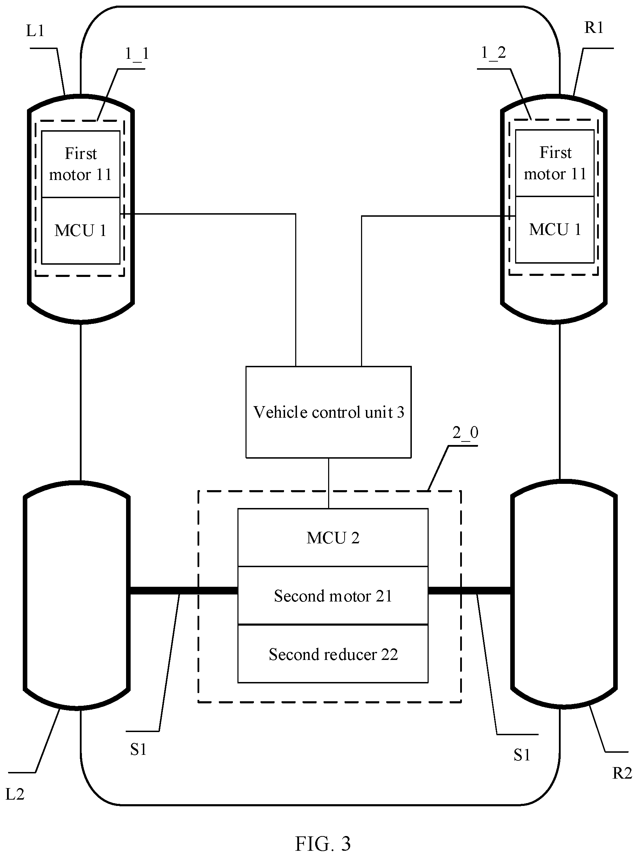

FIG. 3 shows an example of a schematic diagram of a structure of still another vehicle drive system according to an embodiment of this application. With reference to FIG. 3, in this embodiment of this application, the hub drive assemblies 1_1 and 1_2 may include a first motor 11 and a first motor control unit MCU 1; the centralized drive assembly 2_0 includes a second motor 21, a second motor control unit MCU 2, and a second reducer 22; and the vehicle control unit 3 is separately connected to the motor control units MCU 1 and MCU 2.

In a specific implementation, the first motor 11 in the hub drive assembly is disposed in a wheel of the vehicle, and the first motor control unit MCU 1 may be disposed on the wheel, or may be disposed at another position of the vehicle, for example, a chassis of the vehicle. This is not limited herein. The centralized drive assembly 2_0 is usually disposed on the chassis of the vehicle, and the centralized drive assembly 2_0 provides power drive to the left wheel L2 and the right wheel R2 of the vehicle respectively by using two half axles S1.

### Example 2:

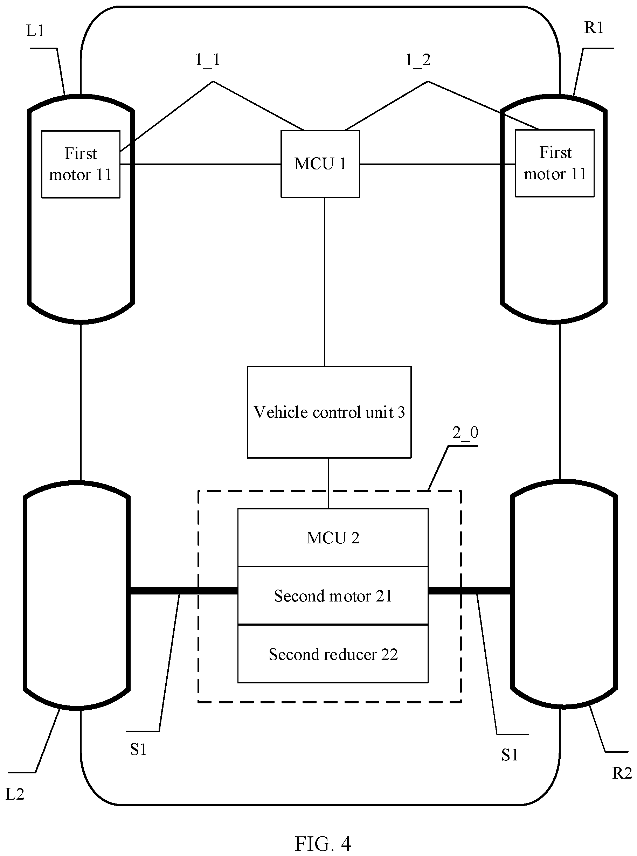

FIG. 4 shows an example of a schematic diagram of a structure of still another vehicle drive system according to an embodiment of this application. With reference to FIG. 4, the first motor control unit MCU 1 in the first hub drive assembly 1_1 and the first motor control unit MCU 1 in the second hub drive assembly 1_2 are a same motor control unit MCU 1. That is, based on Example 2, the two hub drive assemblies 1_1 and 1_2 share a same motor control unit (MCU) 1, to reduce a quantity of motor control units in the vehicle drive system, so that costs can be reduced.

In a specific implementation, the first motor control unit MCU 1 may be disposed on the left wheel L1 of the wheels on the first side of the vehicle, or may be disposed on the right wheel R1 of the wheels on the first side of the vehicle, or certainly may be disposed on the chassis of the vehicle. This is not limited herein.

### Example 3:

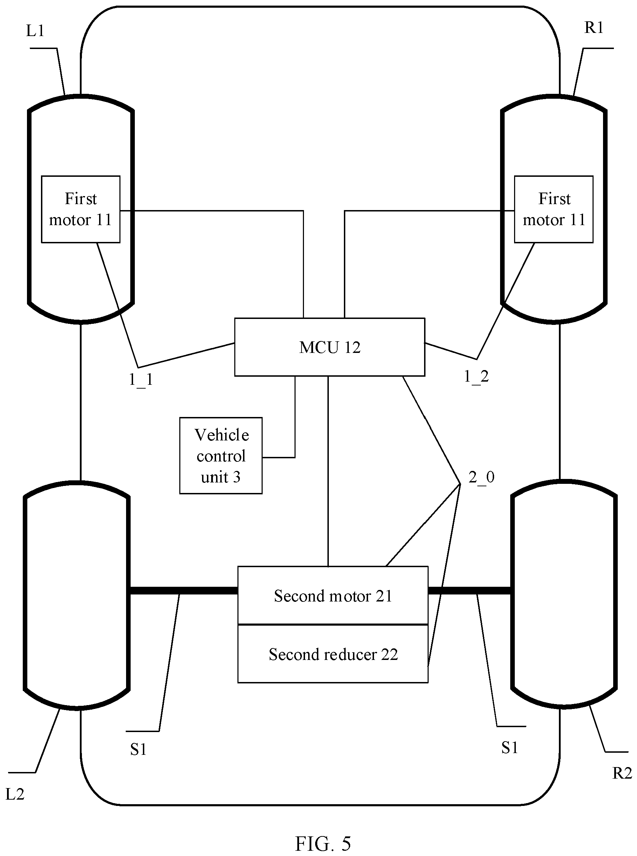

FIG. 5 shows an example of a schematic diagram of a structure of still another vehicle drive system according to an embodiment of this application. With reference to FIG. 5, the second motor control unit in the centralized drive assembly 2_0, the first motor control unit in the first hub drive assembly 1_1, and the first motor control unit in the second hub drive assembly 1_2 are a same motor control unit MCU 12. That is, based on Example 3, the two hub drive assemblies 1_1 and 1_2 and the centralized drive assembly 2_0 share a same motor control unit MCU 12, to further reduce a quantity of motor control units in the vehicle drive system, so that costs can be reduced.

In a specific implementation, the motor control unit MCU 12 may be disposed on the left wheel L1 of the wheels on the first side of the vehicle, or may be disposed on the right wheel R1 of the wheels on the first side of the vehicle, or certainly may be disposed on the chassis of the vehicle. This is not limited herein.

### Example 4:

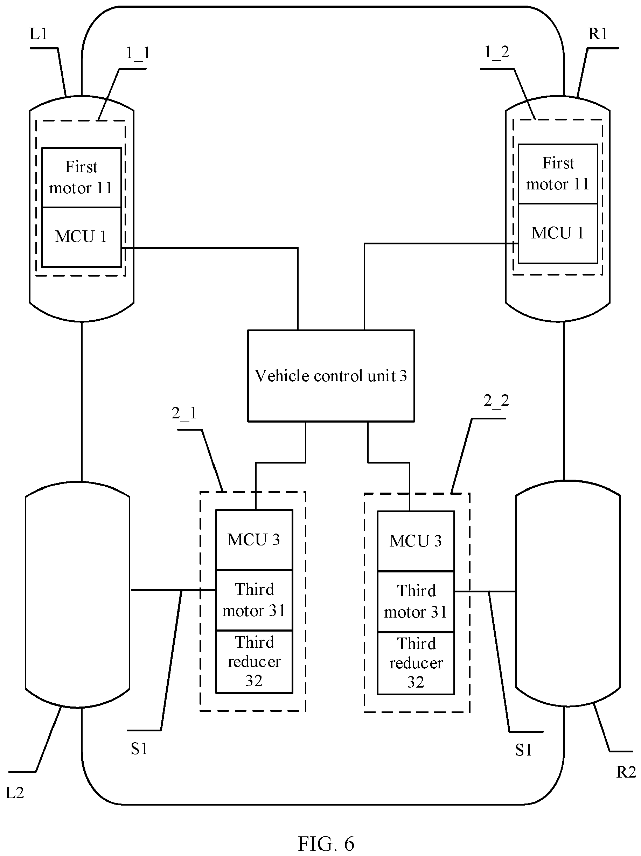

FIG. 6 shows an example of a schematic diagram of a structure of still another vehicle drive system according to an embodiment of this application. With reference to FIG. 6, the hub drive assemblies 1_1 and 1_2 may include a first motor 11 and a first motor control unit MCU 1; the independent drive assemblies 2_1 and 2_2 may include a third motor 31, a third motor control unit MCU 3, and a third reducer 32; and the vehicle control unit 3 is separately connected to the motor control units MCU 1 and MCU 3. The first independent drive assembly 2_1 and the second independent drive assembly 2_2 are used to respectively drive the left wheel L2 and the right wheel R2 of the wheels on the second side of the vehicle, so that the electric vehicle can obtain strong power, and acceleration performance is good, thereby significantly shortening an acceleration time.

In a specific implementation, the first independent drive assembly 2_1 and the second independent drive assembly 2_2 are usually disposed on the chassis of the vehicle, and the independent drive assemblies 2_1 and 2_2 provide power drive to the left wheel L2 and the right wheel R2 of the vehicle respectively by using a half axle S1.

### Example 5:

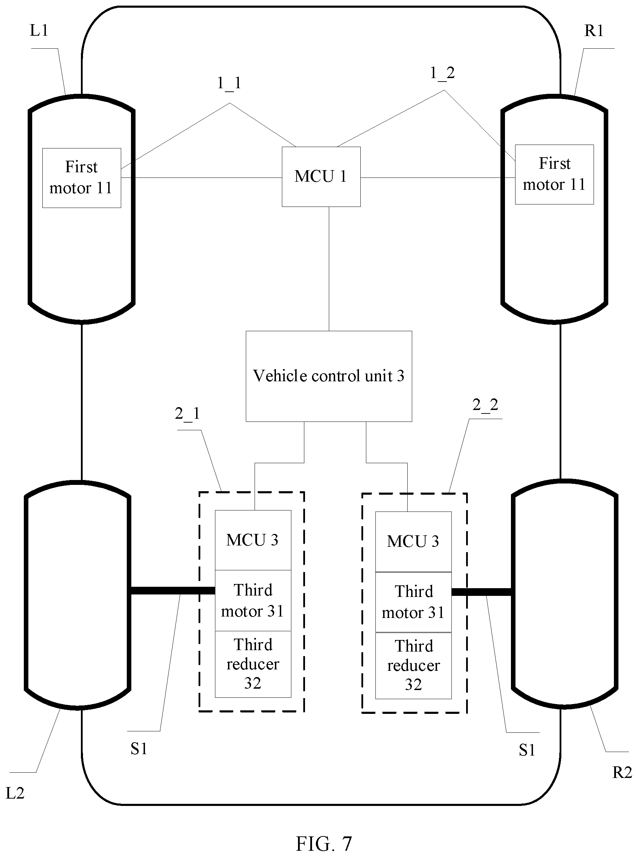

FIG. 7 shows an example of a schematic diagram of a structure of still another vehicle drive system according to an embodiment of this application. With reference to FIG. 7, the first motor control unit MCU 1 in the first hub drive assembly 1_1 and the first motor control unit MCU 1 in the second hub drive assembly 1_2 are a same motor control unit MCU 1. That is, based on Example 4, the two hub drive assemblies 1_1 and 1_2 share a same motor control unit MCU 1, to reduce a quantity of motor control units in the vehicle drive system, so that costs can be reduced.

In a specific implementation, the first motor control unit MCU 1 may be disposed on the left wheel L 1 of the wheels on the first side of the vehicle, or may be disposed on the right wheel R1 of the wheels on the first side of the vehicle, or certainly may be disposed on the chassis of the vehicle. This is not limited herein.

### Example 6:

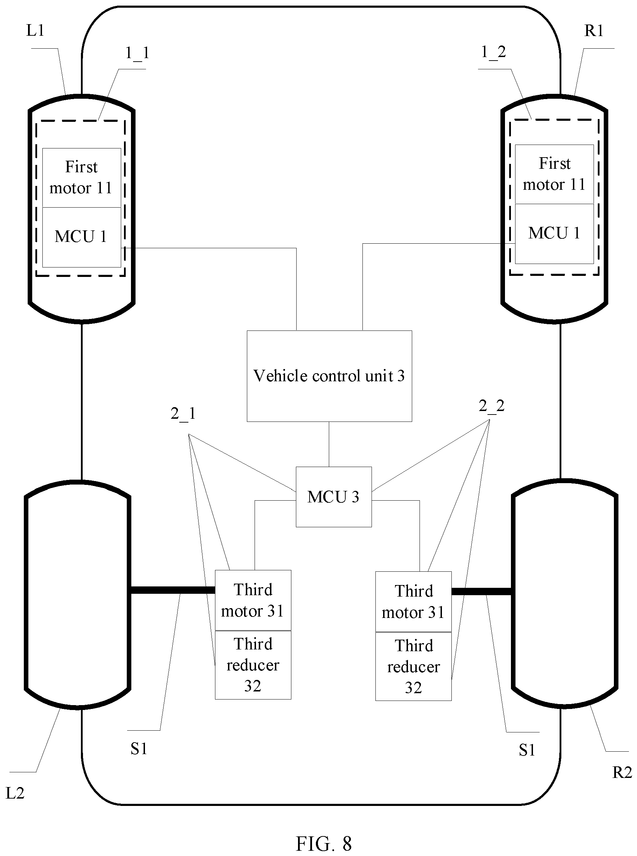

FIG. 8 shows an example of a schematic diagram of a structure of still another vehicle drive system according to an embodiment of this application. With reference to FIG. 8, the third motor control unit MCU 3 in the first independent drive assembly 2_1 and the third motor control unit MCU 3 in the second independent drive assembly 2_2 are a same motor control unit MCU 3. That is, based on Example 4, the two independent drive assemblies 2_1 and 2_2 share a same motor control unit MCU 3, to further reduce a quantity of motor control units in the vehicle drive system, so that costs can be reduced.

In a specific implementation, the third motor control unit MCU 3 may be disposed on the chassis of the vehicle. This is not limited herein.

### Example 7:

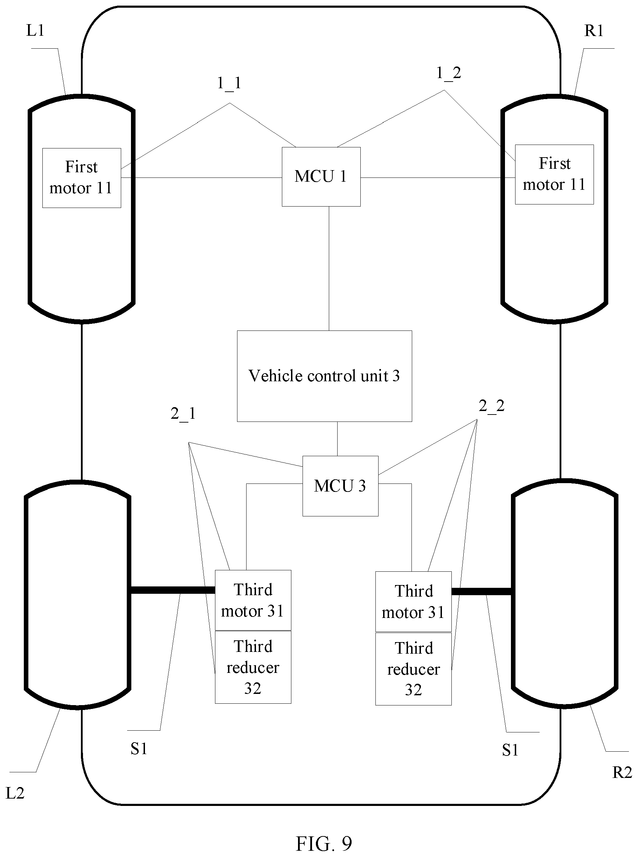

FIG. 9 shows an example of a schematic diagram of a structure of still another vehicle drive system according to an embodiment of this application. With reference to FIG. 9, the first motor control unit MCU 1 in the first hub drive assembly 1_1 and the first motor control unit MCU 1 in the second hub drive assembly 1_2 are a same motor control unit MCU 1. The third motor control unit MCU 3 in the first independent drive assembly 2_1 and the third motor control unit MCU 3 in the second independent drive assembly 2_2 are a same motor control unit MCU 3. That is, by combining Example 5 and Example 6, the two independent drive assemblies 2_1 and 2_2 share a same motor control unit MCU 3, and the two hub drive assemblies 1_1 and 1_2 share a same motor control unit MCU 1, to reduce a quantity of motor control units in the vehicle drive system, so that costs can be reduced.

In a specific implementation, the first motor control unit MCU 1 may be disposed on the left wheel of the wheels on the first side of the vehicle, or may be disposed on the right wheel of the wheels on the first side of the vehicle, or certainly may be disposed on the chassis of the vehicle. The third motor control unit MCU 3 may be disposed on the chassis of the vehicle. This is not limited herein.

### Example 8:

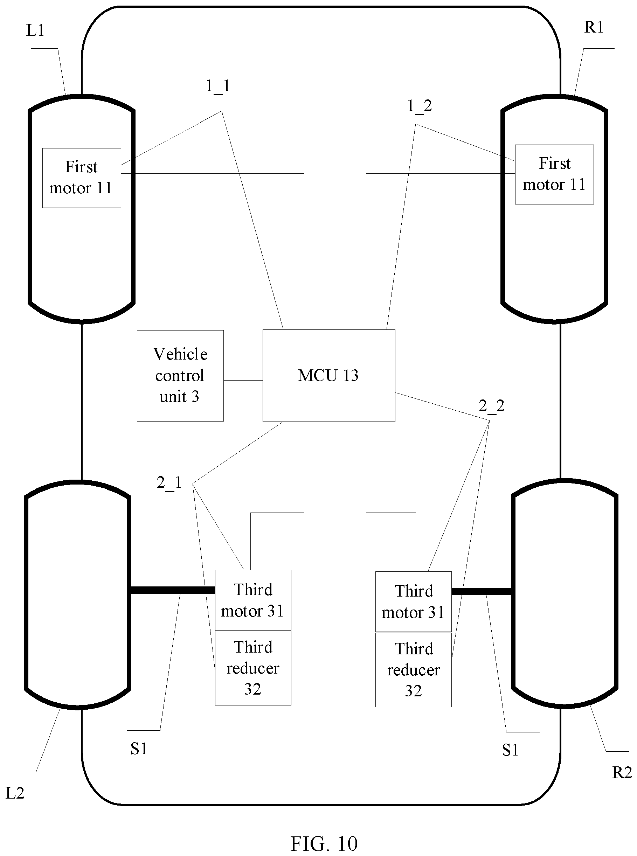

FIG. 10 shows an example of a schematic diagram of a structure of still another vehicle drive system according to an embodiment of this application. With reference to FIG. 10, the third motor control unit in the first independent drive assembly 2_1, the third motor control unit in the second independent drive assembly 2_2, the first motor control unit in the first hub drive assembly 1_1, and the first motor control unit in the second hub drive assembly 1_2 are a same motor control unit MCU 13. That is, based on Example 7, the two hub drive assemblies 1_1 and 1_2 and the two independent drive assemblies 2_1 and 2_2 share a same motor control unit MCU 13, to further reduce a quantity of motor control units in the vehicle drive system, so that costs can be reduced.

In a specific implementation, the motor control unit MCU 13 may be disposed on the left wheel L1 of the wheels on the first side of the vehicle, or may be disposed on the right wheel R1 of the wheels on the first side of the vehicle, or certainly may be disposed on the chassis of the vehicle. This is not limited herein.

In a specific implementation, in this application, the vehicle control unit (Vehicle Control Unit) is mainly responsible for coordinating coordination work of components such as a battery and a motor, and undertakes tasks such as data exchange and energy flow management. The motor control unit (Motor Control Unit) is configured to control a rotation state of a motor according to an instruction of the vehicle control unit. The reducer is mechanically connected to the motor, to reduce a rotation speed of a wheel and increase a torque.

### Example 9:

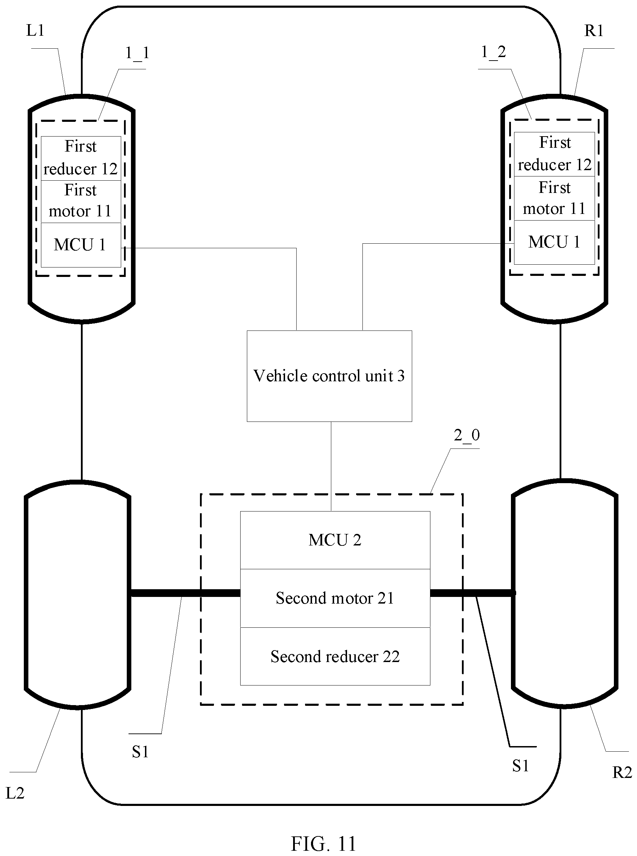

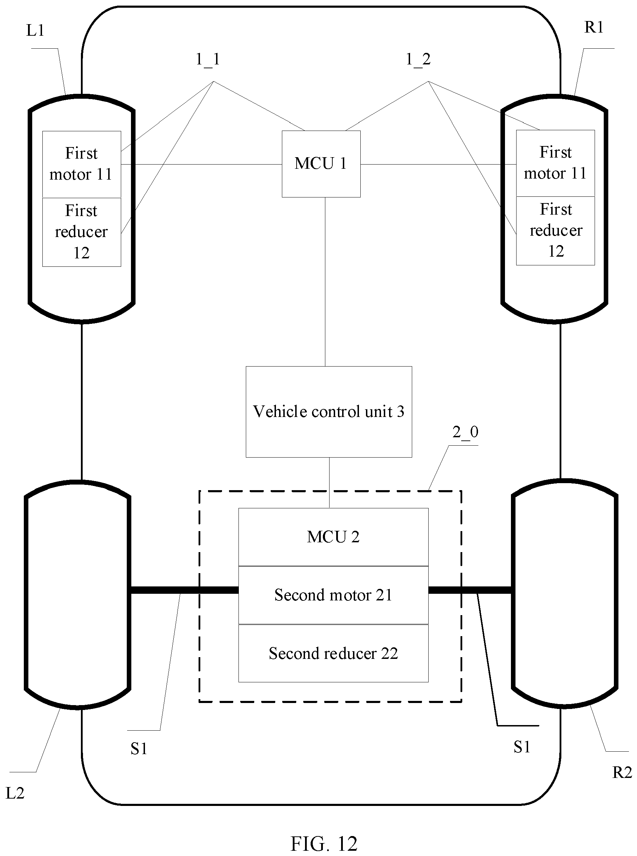

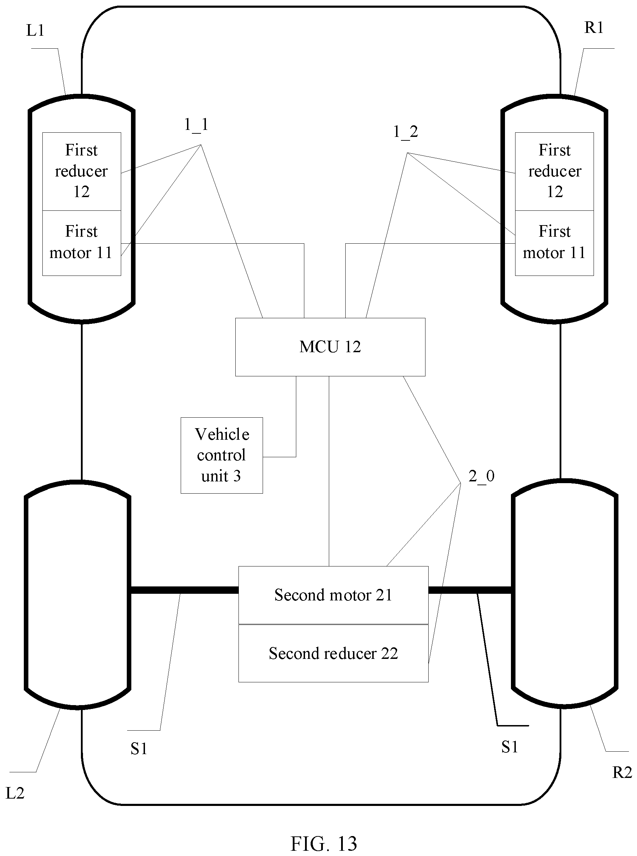

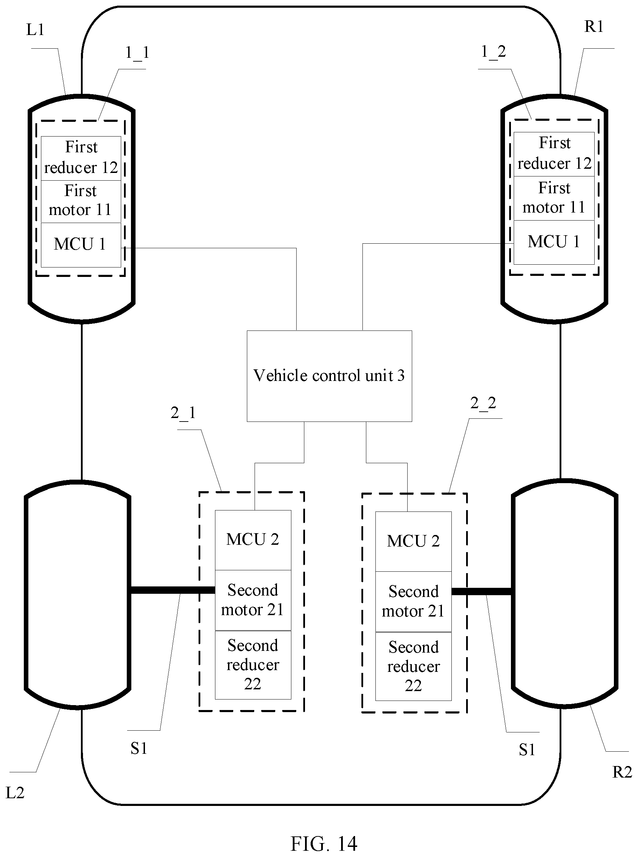

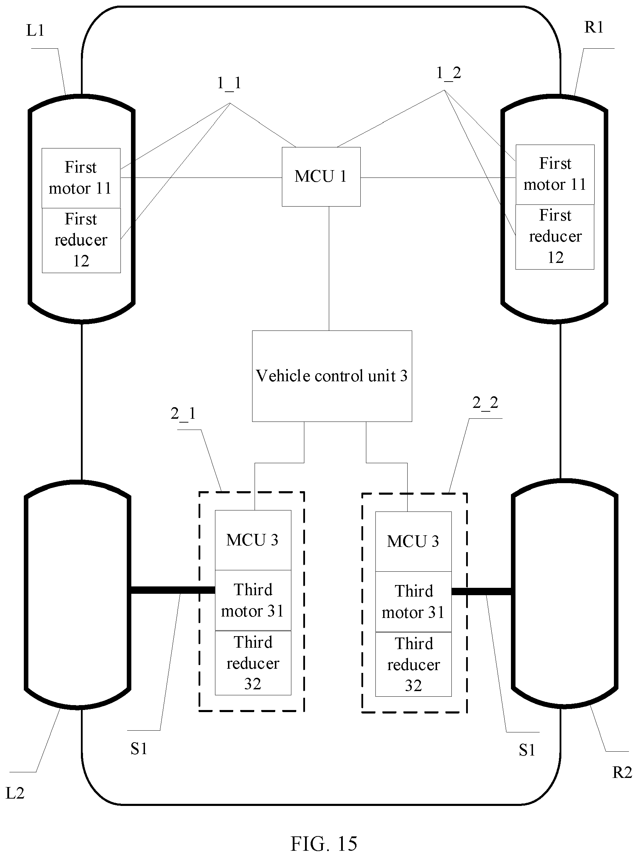

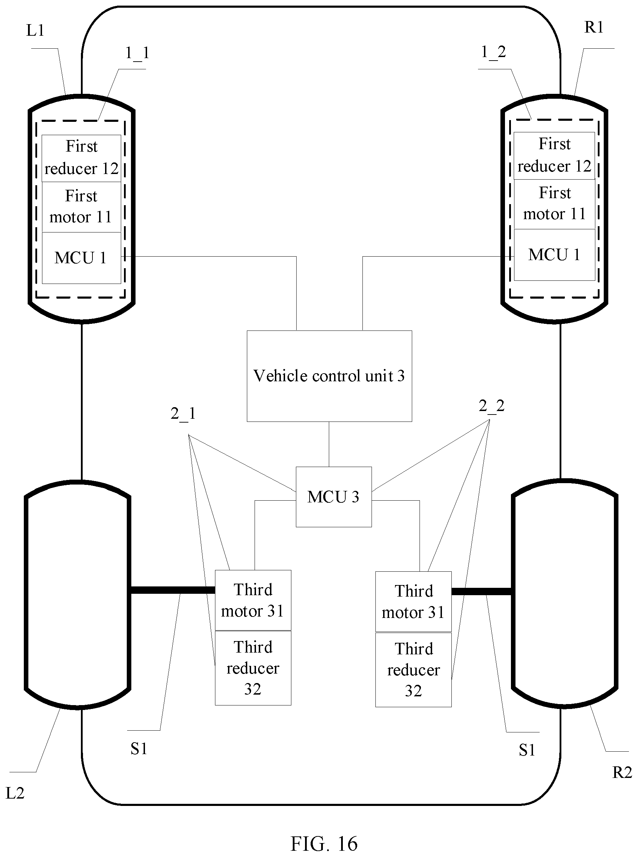

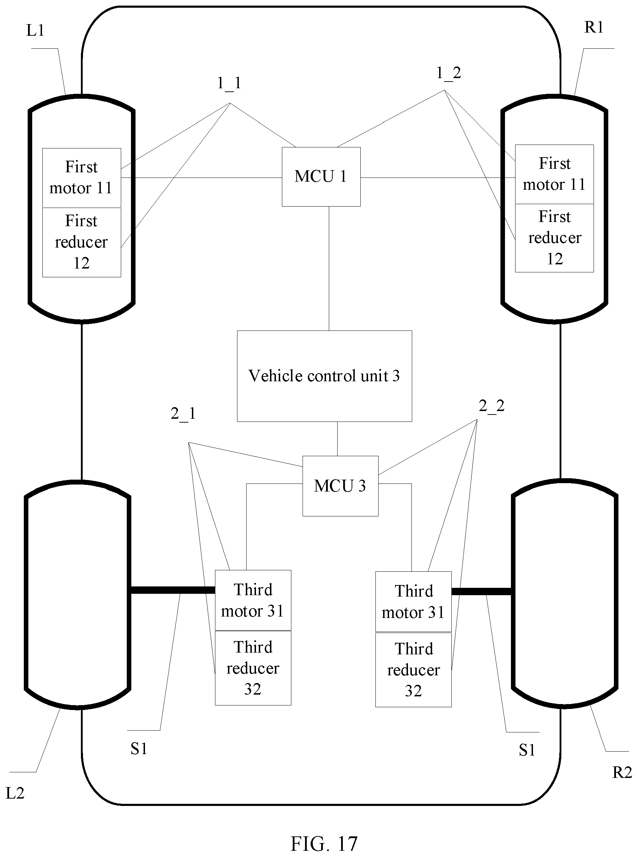

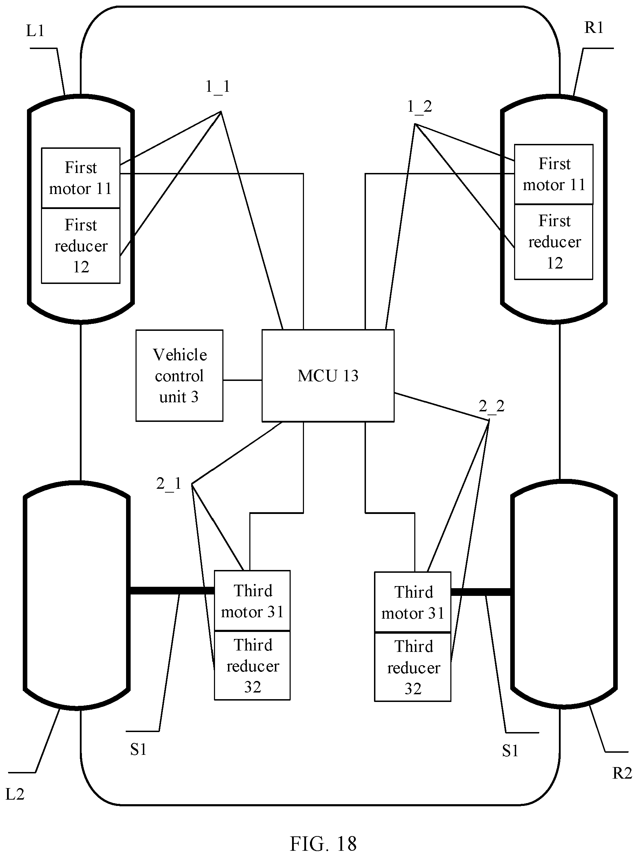

In a specific implementation, in this embodiment of this application, as shown in FIG. 11 to FIG. 18, the hub drive assemblies 1_1 and 1_2 further include a first reducer 12. That is, based on Example 1 to Example 8, the first reducer 12 is added to the hub drive assemblies 1_1 and 1_2, and power of the first motor 11 is reduced by using the first reducer 12, so as to reduce weights and costs of the hub drive assemblies.

In a specific implementation, both the first reducer and the first motor are disposed on a wheel of the vehicle, and the first reducer is mechanically connected to the first motor.

### Example 10:

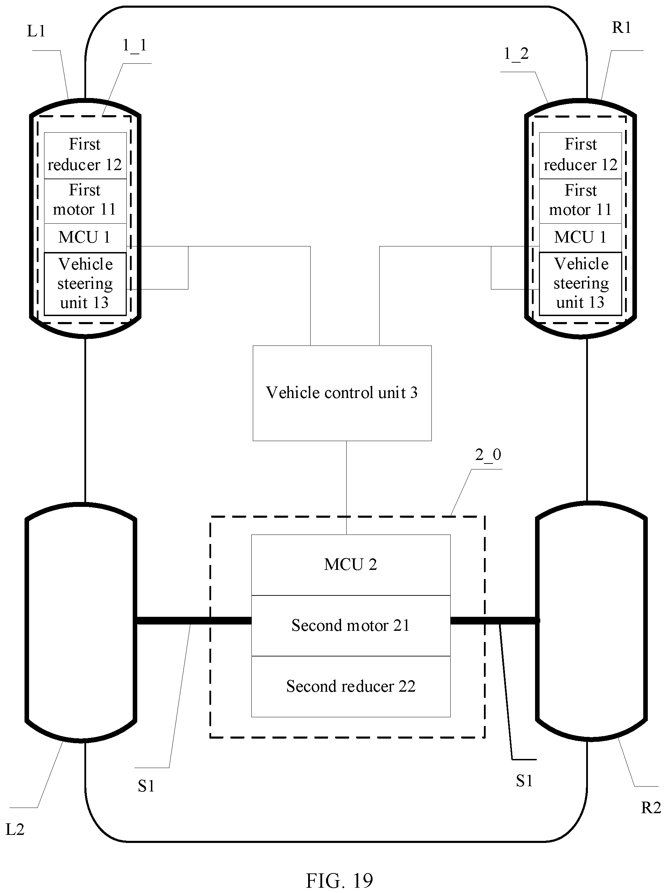

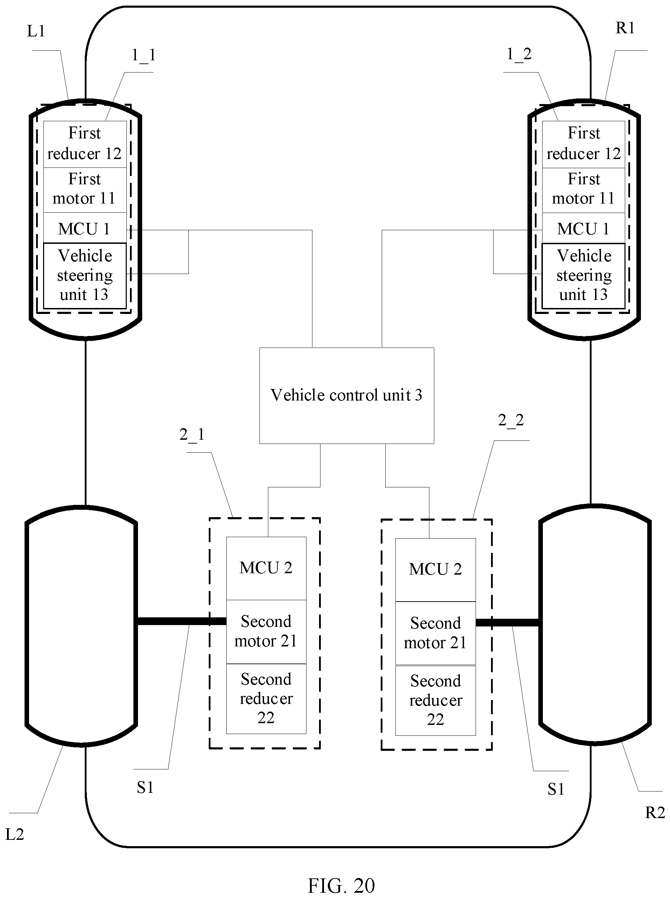

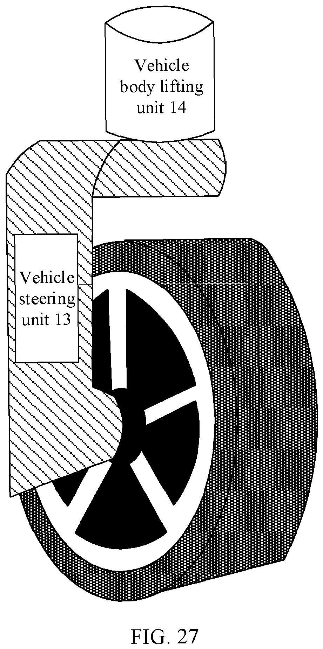

Optionally, in this embodiment of this application, as shown in FIG. 19 and FIG. 20, when the first side is the front side of the vehicle, the hub drive assemblies 1_1 and 1_2 further include a vehicle steering unit 13. The vehicle steering unit 13 is configured to control vehicle steering under control of an instruction of the vehicle control unit 3. In a specific implementation, as shown in FIG. 27, the vehicle steering unit 13 is usually disposed on an outer side of a wheel, to increase a front side space of the vehicle.

It should be noted that, this embodiment is applicable to any case of Examples 1 to 9. This is not limited herein.

### Example 11:

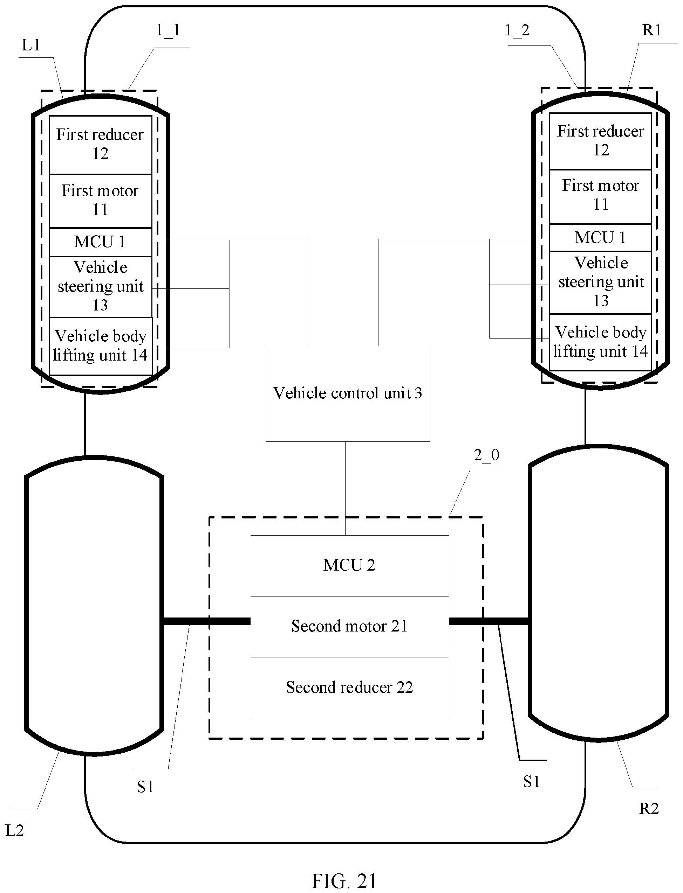

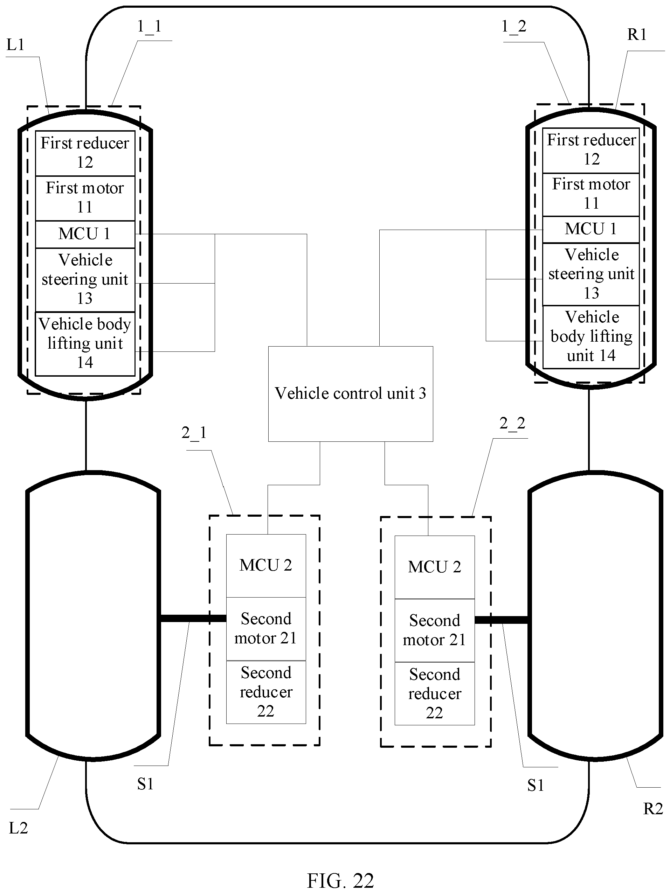

Optionally, in this embodiment of this application, as shown in FIG. 21 and FIG. 22, the hub drive assemblies 1_1 and 1_2 further include a vehicle body lifting unit 14. The vehicle body lifting unit 14 is configured to control ascent and descent of a vehicle body under control of an instruction of the vehicle control unit 3. In a specific implementation, as shown in FIG. 27, the vehicle body lifting unit 14 is usually disposed on an upper side of a wheel, to increase a front side space of the vehicle.

Further, in this embodiment of this application, the hub drive assembly may further include a shock absorption unit, and the shock absorption unit is disposed in the hub drive assembly, to further increase a front side space of the vehicle.

It should be noted that, this embodiment is applicable to any case of Examples 1 to 10. This is not limited herein.

### Example 12:

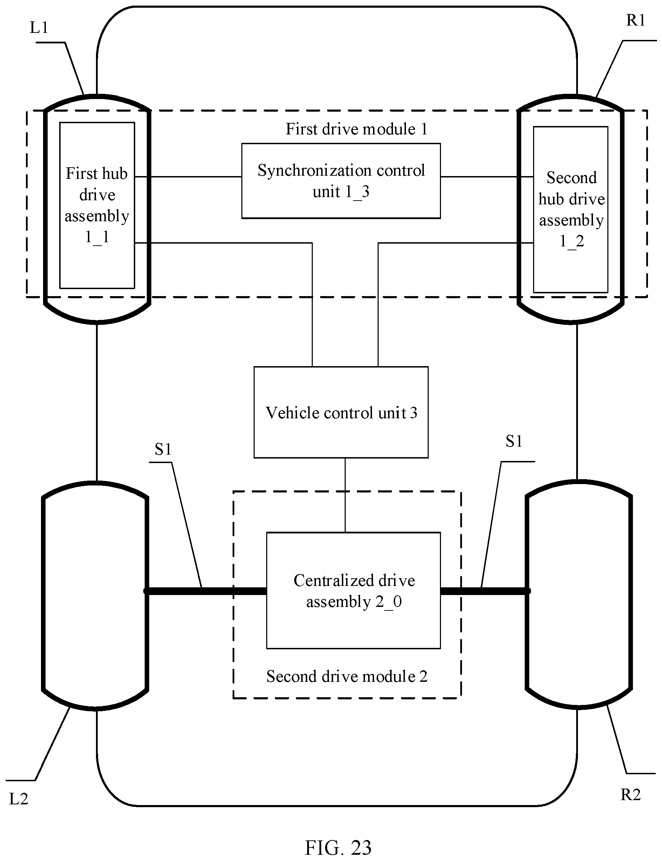

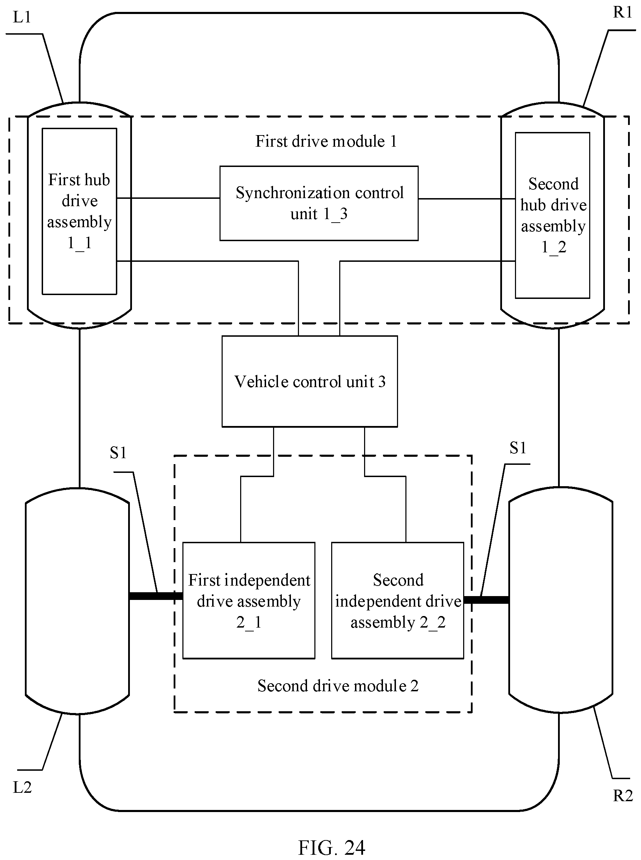

In a specific implementation, in this embodiment of this application, as shown in FIG. 23 and FIG. 24, the first drive module 1 further includes a synchronization control unit 1_3; and the synchronization control unit 1_3 is configured to control, based on one of the hub drive assemblies, the other hub drive assembly. That is, the synchronization control unit 1_3 is configured to control the second hub drive assembly 1_2 based on the first hub drive assembly 1_1, or the synchronization control unit 1_3 is configured to control the first hub drive assembly 1_1 based on the second hub drive assembly 1_2.

In a specific implementation, the synchronization control unit is separately connected to the first motor control unit of the first hub drive assembly and the first motor control unit of the second hub drive assembly. The synchronization control unit is mainly configured to control, based on a wheel speed and a torque of a wheel controlled by one hub drive assembly, a wheel speed and a torque of a wheel controlled by the other hub drive assembly.

A manner of communication between the synchronization control unit and the first hub drive assembly and the second hub drive assembly may be a wireless communication manner, for example, Bluetooth communication, or certainly may be a direct electrical connection.

It should be noted that, this embodiment is applicable to any case of Examples 1 to 11. This is not limited herein.

### Example 13:

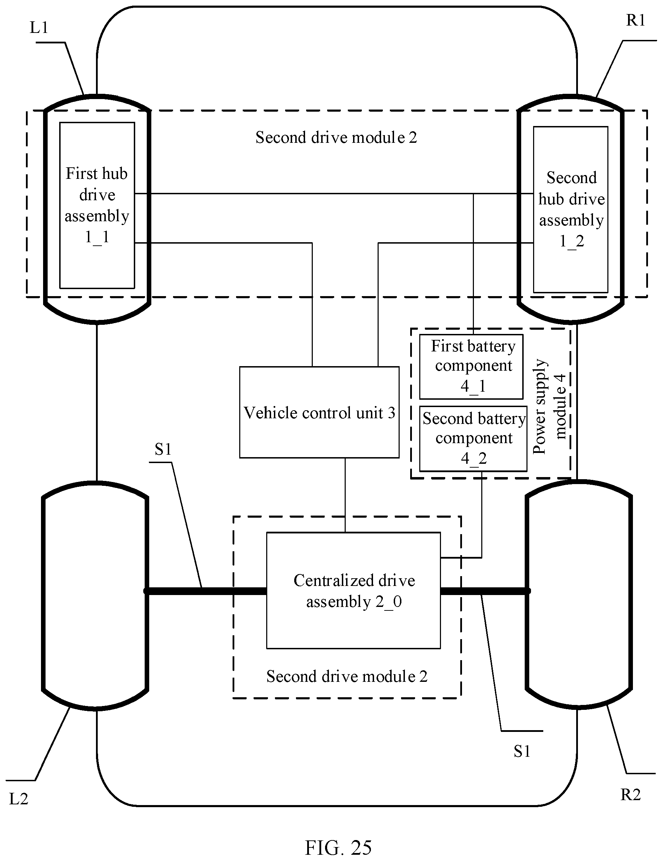

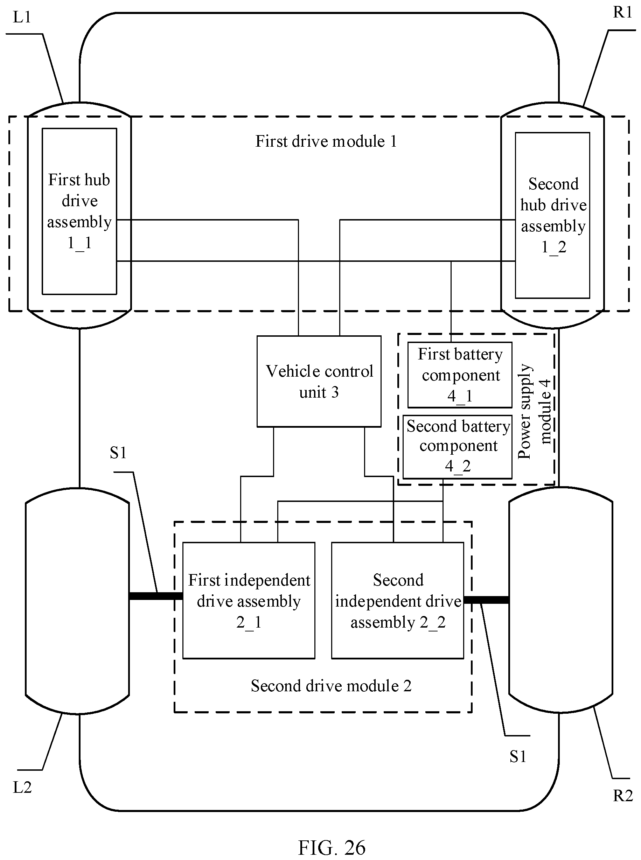

In a specific implementation, in this embodiment of this application, as shown in FIG. 25 and FIG. 26, a power supply module 4 is further included. The power supply module 4 is configured to provide power supplies for the first drive module 1 and the second drive module 2.

In a specific implementation, the power supply module may include one, two, or more battery components. This is not limited herein. A large quantity of battery components in the power supply module indicates high performance, but also higher costs. This may be specifically set based on an actual situation.

Optionally, in this embodiment of this application, as shown in FIG. 25 and FIG. 26, the power supply module 4 includes a first battery component 4_1 and a second battery component 4_2; the first battery component 4_1 is configured to provide a power supply for the first drive module 1; and the second battery component 4_2 is configured to provide a power supply for the second drive module 2. In this way, two battery components 4_2 are used to provide power supplies. In one aspect, a battery life of the vehicle can be improved, and in a further aspect, when one of the battery components has a fault, the other battery component can continue to be used, to provide vehicle safety.

It should be noted that, this embodiment is applicable to any case of Examples 1 to 12. This is not limited herein.

### Example 14:

In a specific implementation, in this embodiment of this application, the motor control unit includes a power control part and an electronic control part; the power control part is configured to convert a voltage of the power supply provided by the power supply module into a target voltage; the electronic control part is configured to control, under control of the vehicle control unit, the power control part to provide the target voltage to the motor; and the electronic control part and the vehicle control unit are integrated together.

In a specific implementation, the motor control unit may be the first motor control unit in the hub drive assembly, or may be the second motor control unit in the centralized drive assembly, or certainly may be the third motor control unit in the independent drive assembly. The electronic control part in the motor control unit and the vehicle control unit are integrated together, so that the corresponding drive assembly can respond in real time and real-time performance of the vehicle drive system can be improved.

It should be noted that, this embodiment is applicable to any case of Examples 1 to 13. This is not limited herein.

Specifically, in the vehicle drive system provided in this application, any one of the motors may include a synchronous motor, an asynchronous motor, an excitation motor, or the like. This is not limited herein.

Optionally, in the vehicle drive system provided in this application, any one of the reducers may include a single-level reducer, a dual-level reducer, or a multi-level reducer. This is not limited herein. Further, a power disconnection module may be further disposed in the reducer, and the power disconnection module is configured to disconnect control of a motor over a wheel.

The vehicle drive system provided in this embodiment of this application may be used in an electric vehicle. An electric vehicle provided in this application includes a vehicle body, a chassis, and the vehicle drive system in any one of the foregoing technical solutions of this application. A problem-resolving principle of the electric vehicle is similar to that of the foregoing vehicle drive system. Therefore, for an implementation of the electric vehicle, refer to the implementation of the foregoing vehicle drive system, and details are not repeated. Because the vehicle drive system provided in this application uses a hybrid drive manner of dual hub drive assemblies and a centralized drive assembly/dual independent drive assemblies, the electric vehicle in this application also has advantages of both the hub drive assembly and the centralized drive assembly/dual independent drive assemblies, and the advantages of the hub drive assembly are mainly used to make best use of the advantages and bypass disadvantages, thereby improving operation efficiency of the vehicle drive system, simplifying a structure, and implementing an electronic differential.

It is clear that a person skilled in the art can make various modifications and variations to this application without departing from the scope of this application. In this way, if these modifications and variations of this application fall within the scope of the claims of this application and equivalent technologies of this application, this application is also intended to include these modifications and variations.

## Claims

1. A vehicle drive system, comprising:
a first drive module, wherein the first drive module is configured to drive wheels on a first side of a vehicle;
a second drive module, wherein the second drive module is configured to drive wheels on a second side of the vehicle; and
a vehicle control unit, wherein the vehicle control unit is configured to control the first drive module and the second drive module, wherein
one of the first side and the second side is a front side, and the other is a rear side;
the first drive module comprises a first hub drive assembly and a second hub drive assembly, and the first hub drive assembly and the second hub drive assembly are respectively configured to drive a left wheel and a right wheel of the wheels on the first side; and
the second drive module comprises a centralized drive assembly, and the centralized drive assembly is configured to drive a left wheel and a right wheel of the wheels on the second side synchronously; or the second drive module comprises a first independent drive assembly and a second independent drive assembly, and the first independent drive assembly and the second independent drive assembly are respectively configured to drive the left wheel and the right wheel of the wheels on the second side.

2. The vehicle drive system according to claim 1, wherein the hub drive assembly comprises a first motor and a first motor control unit;
the centralized drive assembly comprises a second motor, a second motor control unit, and a second reducer; and
the vehicle control unit is separately connected to each motor control unit.

3. The vehicle drive system according to claim 1, wherein the hub drive assembly comprises a first motor and a first motor control unit;
each of the independent drive assemblies comprises a third motor, a third motor control unit, and a third reducer; and
the vehicle control unit is separately connected to each motor control unit.

4. The vehicle drive system according to claim 2 or 3, wherein the first motor control unit in the first hub drive assembly and the first motor control unit in the second hub drive assembly are a same motor control unit.

5. The vehicle drive system according to claim 2, wherein the second motor control unit in the centralized drive assembly, the first motor control unit in the first hub drive assembly, and the first motor control unit in the second hub drive assembly are a same motor control unit.

6. The vehicle drive system according to claim 3, wherein the third motor control unit in the first independent drive assembly and the third motor control unit in the second independent drive assembly are a same motor control unit.

7. The vehicle drive system according to claim 3, wherein the first motor control unit in the first hub drive assembly, the first motor control unit in the second hub drive assembly, the third motor control unit in the first independent drive assembly, and the third motor control unit in the second independent drive assembly are a same motor control unit.

8. The vehicle drive system according to any one of claims 2 to 7, wherein the hub drive assembly further comprises a first reducer

9. The vehicle drive system according to claim 8, wherein the hub drive assembly further comprises a vehicle steering unit.

10. The vehicle drive system according to claim 8, wherein the hub drive assembly further comprises a vehicle body lifting unit.

11. The vehicle drive system according to claim 8, wherein any one of the motors comprises a synchronous motor, an asynchronous motor, or an excitation motor

12. The vehicle drive system according to claim 8, wherein any one of the reducers comprises a single-level reducer, a dual-level reducer, or a multi-level reducer.

13. The vehicle drive system according to any one of claims 1 to 12, wherein the first drive module further comprises a synchronization control unit; and
the synchronization control unit is configured to control, based on one of the hub drive assemblies, the other hub drive assembly.

14. The vehicle drive system according to any one of claims 1 to 12, further comprising a power supply module, wherein the power supply module is configured to provide a power supply for the first drive module and the second drive module.

15. The vehicle drive system according to claim 14, wherein the power supply module comprises a first battery component and a second battery component;
the first battery component is configured to provide a power supply for the first drive module; and
the second battery component is configured to provide a power supply for the second drive module.

16. The vehicle drive system according to claim 14, wherein the motor control unit comprises a power control part and an electronic control part;
the power control part is configured to convert a voltage of the power supply provided by the power supply module into a target voltage;
the electronic control part is configured to control, under control of the vehicle control unit, the power control part to provide the target voltage to the motor; and
the electronic control part and the vehicle control unit are integrated together

17. An electric vehicle, comprising a vehicle body, a chassis, and the vehicle drive system according to any one of claims 1 to 16.
